# EUROPÄISCHE PATENTSCHRIFT

(11) **EP 0 646 500 B1**
(45) Veröffentlichungstag und Bekanntmachung des Hinweises auf die Patenterteilung: **18.06.1997**
(21) Anmeldenummer: 94115051.8
(22) Anmeldetag: 23.09.1994
(51) Int. Cl.: B60R 21/20, B60H 1/34

(54) **Instrumententafel für ein Kraftfahrzeug**
Dash-board for a motor vehicle
Tableau de bord pour un véhicule automobile

(30) Priorität: 29.09.1993 DE 4333135; 27.05.1994 DE 4418583
(43) Veröffentlichungstag der Anmeldung: 05.04.1995
(73) Patentinhaber: MERCEDES-BENZ AG, 70327 Stuttgart (DE)
(72) Erfinder: Henseler, Wolfgang, Dipl.-Ing., D-71083 Herrenberg (DE)

(56) Entgegenhaltungen:
- DE-A- 4 137 926
- DE-U- 1 909 519
- FR-A- 2 655 908
- PATENT ABSTRACTS OF JAPAN vol. 18, no. 177 (M-1582) 25. März 1994 & JP-A-05 338 468 (KANSEI CORP.) 21. Dezember 1993

## Beschreibung

Die Erfindung betrifft eine Instrumententafel für ein Kraftfahrzeug, die sich vor einer Fahrer- und einer Beifahrerposition über die Breite eines Innenraumes erstreckt, und die eine mit einer Vielzahl von wenigstens über einen beifahrerseitigen Bereich verteilten kleinen Durchbrüchen versehene Außenhaut aufweist.

Eine solche Instrumententafel ist aus dem DE 19 09 519 U bekannt. Dort ist die Instrumententafel im Innenraum eines Kraftfahrzeuges über die gesamte Breite des Innenraumes mit einer Vielzahl von Durchbrüchen versehen, die zur Führung von konditionierter oder klimatisierter Luft in den Fahrgastraum dienen. Dabei ist unterhalb des Versteifungsformteiles der Instrumententafel eine Kammer vorgesehen, die als Verteilerraum für die konditionierte oder klimatisierte Luft dient.

Aufgabe der Erfindung ist es, eine Instrumententafel der eingangs genannten Art zu schaffen, die im Bereich der Beifahrerposition optisch unauffällig und kostengünstig das Vorsehen eines Beifahrer-Gassacks ermöglicht.

Diese Aufgabe wird dadurch gelöst, daß die Außenhaut aus einem temperaturunabhängig formsteifen Kunststoffmaterial hergestellt ist, daß eine unterhalb der Außenhaut vorgesehene Instrumententafelversteifung im Bereich der Beifahrerposition eine Durchtrittsöffnung für einen Beifahrer-Gassack aufweist, daß die Durchbrüche als Perforationen angeordnet sind, die im Bereich der Durchtrittsöffnung ein Aufreißen der Außenhaut ermöglichen, und daß die über die Instrumententafel verteilten Perforationen eine derart an die Konturen der Durchtrittsöffnung angepaßte Musterung aufweisen, daß der potentielle Austrittsbereich des Gassacks nicht erkennbar ist.

Da die Durchbrüche wenigstens über die gesamte Beifahrerseite auf der Außenhaut als Perforationen angeordnet sind, ergibt sich ein stilistisch gleichmäßiges Bild der Instrumententafel. Perforationen lediglich im Bereich der Durchtrittsöffnung für den Beifahrer-Gassack, die auffällig auf das Vorhandensein eines Beifahrer-Gassacks hinweisen, werden somit vermieden. Eine derart perforierte Instrumententafel ist aus der DE 41 37 926 A1 bekannt, bei der dieser stilistisch ungünstige Eindruck durch eine auf die Instrumententafel aufgeklebte Schaumstoffplatte überdeckt ist. Durch die Verwendung des temperaturunabhhängig formsteifen Kunststoffmaterials behalten die Perforationen auch bei starkem Wärme- oder Kälteeinfluß ihre geometrische Form bei, wodurch sich der ästhetische Gesamteindruck nicht verändert. Außerdem wird dadurch eine immer gleichbleibende Aufreißkennlinie der Außenhaut nach der Zündung des Beifahrer-Gassacks gewährleistet. Als besonders vorteilhaft hat sich der Einsatz von Liquid- oder Pulver-Slush-Häuten erwiesen. Die über die Instrumententafel verteilten Perforationen weisen eine an die Konturen der Durchtrittsöffnung angepaßte Musterung auf. Die Musterung im Bereich der Durchtrittsöffnung setzt sich daher über die gesamte Breite der Instrumententafel fort, wodurch ein gleichmäßiger, ästhetisch ansprechender Gesamteindruck entsteht.

In weiterer Ausgestaltung der Erfindung ist die Durchtrittsöffnung durch eine an der Instrumententafelversteifung schwenkbar gehaltene Klappe verdeckt, und zwischen der Instrumententafelversteifung und der Außenhaut ist eine weiche, elastische, energieabsorbierende Zwischenschicht vorgesehen. Durch die Klappe wird verhindert, daß die Außenhaut im Bereich der Durchtrittsöffnung einfällt. Die energieabsorbierende Zwischenschicht bietet über die gesamte Breite der Instrumententafel einen Schutz vor Aufprallverletzungen für Fahrzeuginsassen. Dadurch entsteht eine Pufferschicht vor dem relativ starren Formteil der Instrumententafelversteifung.

In weiterer Ausgestaltung der Erfindung sind in der Instrumententafelversteifung mehrere Belüftungsöffnungen für den rückseitigen Anschluß von Belüftungsleitungen vorgesehen, durch die Luft über die Perforationen in den Innenraum führbar ist. Dadurch übernehmen die Perforationen eine Zusatzfunktion, wobei durch die gegenüber dem Stand der Technik wesentlich enger aneinander gereihten Perforationen ein sehr gleichmäßiges Innenraumklima geschaffen werden kann.

Weitere Vorteile und Merkmale der Erfindung ergeben sich aus den Unteransprüchen sowie aus der nachfolgenden Beschreibung eines Ausführungsbeispiels der Erfindung, das anhand der Zeichnungen dargestellt ist.

Es zeigen:
- Fig. 1:: eine perspektivische Darstellung eines Teils eines Innenraumes eines Personenkraftwagens im Bereich einer vor einer Fahrer- und einer Beifahrerposition angeordneten Instrumententafel, deren Außenhaut mit kleinen Durchbrüchen in Form von Perforationen versehen ist,
- Fig. 2:: einen Querschnitt durch eine Oberseite der Instrumententafel auf Höhe der Beifahrerposition entlang der Schnittlinie II-II in Fig. 1, aus der erkennbar ist, daß das steife Formteil der Instrumententafel aus drei Schichten aufgebaut ist, und
- Fig. 3:: eine Draufsicht auf den beifahrerseitigen Bereich der Instrumententafel nach Fig. 1 in Richtung des Pfeiles III in Fig. 1.

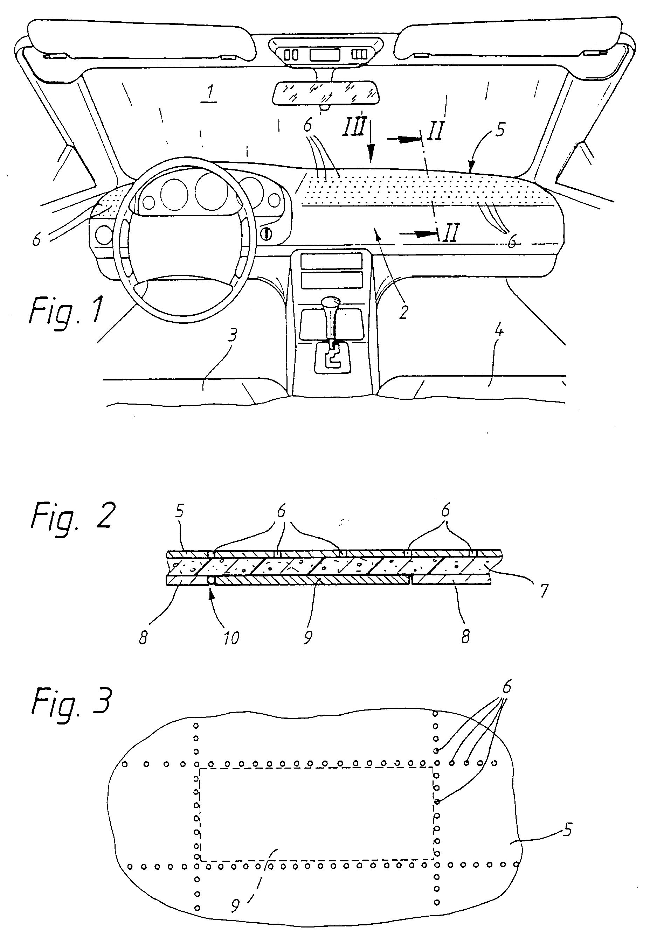

Das Kraftfahrzeug nach Fig. 1 weist einen Innenraum mit einer Fahrerposition 3 und einer Beifahrerposition 4 auf, die jeweils durch ein Sitzkissen schematisiert dargestellt sind. Vor der Fahrer- und der Beifahrerposition 3, 4 ist unterhalb einer Windschutzscheibe eine Instrumententafel 2 angeordnet, die sich über die gesamte Breite des Innenraumes erstreckt. Die Instrumententafel 2 weist ein steifes Formteil auf, das in den Innenraum einsetzbar und mit karosseriefesten Teilen verbindbar ist. Die Instrumententafel 2 weist eine Instrumententafelversteifung 8 auf (Fig. 2), die als Kunststofformteil entsprechend den stilistischen und technisch notwendigen Vorgaben für das Kraftfahrzeug geformt ist. Auf diese Instrumententafelversteifung 8 ist eine als Zwischenschicht dienende Kunststoffschaumschicht 7 aufgebracht, die energieabsorbierende Wirkung hat. Diese Kunststoffschaumschicht 7 schließlich ist von einer Außenhaut 5 überzogen, die aus einem temperaturunabhängig formstabilen Kunststoffmaterial hergestellt ist. Beim Ausführungsbeispiel besteht die Außenhaut aus einer Liquid-Slush-Haut. Bei anderen Ausführungsbeispielen der Erfindung sind Pulver-Slush-Häute eingesetzt. Über die gesamte Breite des Innenraumes sind auf der an die Windschutzscheibe 1 anschließenden Oberseite der Instrumententafel 2 kleine Durchbrüche 6 in der Außenhaut verteilt vorgesehen, die in Form von Perforationen aneinandergereiht sind. Die aus den Durchbrüchen 6 gebildeten Perforationen stellen über die gesamte Breite des Innenraumes auf der Außenhaut 5 eine gleichmäßige, karierte Musterung dar. Die Musterung ist dabei an die Kontur einer Durchtrittsöffnung für einen beifahrerseitigen Gassack angepaßt (Fig. 3). Auf Höhe der Beifahrerposition ist in der Oberseite der Instrumententafel nämlich eine Durchtrittsklappe 9 vorgesehen, die mittels eines Kunststoffscharnieres 10 an der Instrumententafelversteifung 8 schwenkbar gehalten ist. Hinter dieser Durchtrittsklappe 9 befindet sich ein beifahrerseitiger Gassack. Die Scharnierachse des Kunststoffscharnieres 10 verläuft dabei so, daß die Durchtrittsklappe 9 bei einer Zündung des Beifahrer-Gassacks in Fahrtrichtung nach vorne gegen die Windschutzscheibe 1 aufgeklappt wird. Die Durchtrittsklappe 9 weist eine rechteckige Form auf und ist so an die Größe des Beifahrer-Gassacks angepaßt, daß sie bei einer Zündung ein einwandfreies Aufblasen des Beifahrer-Gassacks ermöglicht. Die mittels der Durchbrüche 6 gebildeten Perforationen in der Außenhaut 5 verlaufen parallel zu der Kontur der Durchtrittsklappe 9, so daß die Außenhaut 5 bei einer Zündung des Beifahrer-Gassacks durch die nach oben drückende Durchtrittsklappe 9 aufgerissen wird.

Die durch die Perforationen gebildete viereckige Feldumrandung setzt sich über die gesamte Oberseite der Instrumententafel 2 fort, so daß sich eine gleichmäßige Musterung der Oberseite der Instrumententafel 2 ergibt. Bei anderen Ausführungsformen der Erfindung sind andere Musterungen gewählt, die einerseits zusätzlich als Belüftungsöffnungen für die Verteilung von klimatisierter Luft im Innenraum dienen können oder andererseits an entsprechend andere Formen der Durchtrittsklappe 9 angepaßt sind. Maßgebliche Vorgabe bei allen Ausführungsformen ist lediglich, daß bei Bedarf ein sicheres Aufreißen der Außenhaut 5 im Bereich der Durchtrittsklappe 9 gewährleistet ist. Da die Außenhaut 5 und damit insbesondere auch die kleinen Durchbrüche 6 auch bei starker Wärmeeinstrahlung oder bei Frost ihre geometrische Form beibehalten, wird temperaturunabhängig immer ein gleichbleibendes Aufreißen der Außenhaut 5 erreicht.

## Patentansprüche

1. Instrumententafel für ein Kraftfahrzeug, die sich vor einer Fahrer- und einer Beifahrerposition über die Breite eines Innenraumes erstreckt, und die eine mit einer Vielzahl von wenigstens über einen beifahrerseitigen Bereich verteilten kleinen Durchbrüchen (6) versehene Außenhaut (5) aufweist,
**dadurch gekennzeichnet,**
daß die Außenhaut (5) aus einem temperaturunabhängig formstabilen Kunststoffmaterial hergestellt ist, daß eine unterhalb der Außenhaut (5) vorgesehene Instrumententafelversteifung (8) im Bereich der Beifahrerposition (4) eine Durchtrittsöffnung für einen Beifahrer-Gassack aufweist, daß die Durchbrüche (6) als Perforationen angeordnet sind, die im Bereich der Durchtrittsöffnung ein Aufreißen der Außenhaut (5) ermöglichen, und daß die über die Instrumententafel (2) verteilten Perforationen eine derart an die Konturen der Durchtrittsöffnung angepaßte Musterung aufweisen, daß der potentielle Austrittsbereich des Gassacks nicht erkennbar ist.

2. Instrumententafel nach Anspruch 1,
**dadurch gekennzeichnet,**
daß die Durchtrittsöffnung in an sich bekannter Weise durch eine an der Instrumententafelversteifung (8) schwenkbar gehaltene Klappe (9) verdeckt ist, und daß zwischen der Instrumententafelversteifung (8) und der Außenhaut (5) eine weiche energieabsorbierende Zwischenschicht vorgesehen ist.

3. Instrumententafel nach Anspruch 1,
**dadurch gekennzeichnet,**
daß in der Instrumententafelversteifung (8) mehrere Belüftungsöffnungen für den rückseitigen Anschluß von Belüftungsleitungen vorgesehen sind, durch die in an sich bekannter Weise Luft über die Perforationen in den Innenraum führbar sind.

## Claims

1. A dashboard for a motor vehicle, which extends across the width of an interior in front of a driver's and a passenger's seat and which has an outer skin (5) with a plurality of orifices (6) distributed at least over the region of the passenger side,
**characterised in that**
the outer skin (5) is made from a moulded plastics material that retains its form irrespective of temperature, a dashboard facia panel (8) provided underneath the outer skin (5) in the region of the passenger's seat (4) has a passage orifice for a passenger air-bag, the orifices (6) are arranged as perforations which allow the outer skin (5) to be torn open in the region of the passage orifice and the perforations distributed across the dashboard (2) are arranged in a pattern matching the contours of the passage orifice such that the potential region through which the air-bag will potentially emerge is not perceptible.

2. A dashboard as claimed in claim 1,
**characterised in that**
the passage orifice is covered in a known manner by means of a swivel-mounted flap (9) on the dashboard facia panel (8) and a soft, energy-absorbing intermediate layer is provided between the dashboard facia panel (8) and the outer skin.

3. A dashboard as claimed in claim 1,
**characterised in that**
several air vents are provided in the dashboard facia panel (8), through which air can be directed in a known manner into the interior through the perforations.

## Revendications

1. Tableau de bord pour un véhicule automobile, qui s'étend devant une position de conducteur et une position de passager, sur la largeur de l'espace intérieur, et qui présente une peau extérieure (5) munie d'un grand nombre de petits trous (6) répartis sur au moins une région du côté passager,
**caractérisé,**
en ce que la peau extérieure (5) est réalisée en une matière synthétique indéformable de manière indépendante de la température, en ce qu'un raidisseur (8) du tableau de bord prévu sous la peau extérieure (5) présente dans la région de la position du passager (4) une ouverture de passage pour un coussin gonflable côté passager, en ce que les trous (6) sont disposés à la façon de perforations qui permettent à la peau extérieure (5) de se déchirer dans la région de l'ouverture de passage et en ce que les perforations réparties sur le tableau de bord (2) présentent un motif adapté aux contours de l'ouverture de passage, de sorte que la région de sortie potentielle du coussin gonflable ne se remarque pas.

2. Tableau de bord selon la revendication 1
**caractérisé,**
en ce que l'ouverture de passage est recouverte d'une façon connue en soi par une trappe (9) qui est montée pivotante sur le raidisseur (8) du tableau de bord et en ce qu'il est prévu une couche intermédiaire molle, absorbant l'énergie entre le raidisseur (8) du tableau de bord et la peau extérieure (5).

3. Tableau de bord selon la revendication 1
**caractérisé,**
en ce que plusieurs ouvertures de ventilation sont prévues dans le raidisseur (8) du tableau de bord pour se raccorder sur la face arrière a des conduites de ventilation par lesquelles de l'air petit être guidé d'une façon connue en soi dans l'espace intérieur à travers les perforations.
